# EUROPEAN PATENT SPECIFICATION

(11) **EP 4 133 193 B1**
(45) Date of publication and mention of the grant of the patent: **07.10.2026**
(21) Application number: 21718253.4
(22) Date of filing: 08.04.2021
(51) Int. Cl.: B64G 1/22, B64G 1/64, F16F 1/02, F16F 1/38, F16F 15/08, F16F 1/373, F16F 9/30, F16F 13/00

(54) **DEVICE FOR MOUNTING A LOAD TO A CARRIER, ASSEMBLY, VEHICLE AND METHODS**
VORRICHTUNG ZUR BEFESTIGUNG EINER LAST AN EINEM TRÄGER, ANORDNUNG, FAHRZEUG UND VERFAHREN
DISPOSITIF DE MONTAGE D'UNE CHARGE SUR UN ENSEMBLE DE SUPPORT, VÉHICULE ET PROCÉDÉS

(30) Priority: 09.04.2020 EP 20168961
(43) Date of publication of application: 15.02.2023
(73) Proprietor: Nederlandse Organisatie voor toegepast- natuurwetenschappelijk onderzoek TNO, 2595 DA 's-Gravenhage (NL)
(72) Inventor: VAN KEMPEN, Floris Clemens Maria, 2595 DA 's-Gravenhage (NL); DE VREUGD, Jan, 2595 DA 's-Gravenhage (NL); CROWCOMBE, William Edward, 2595 DA 's-Gravenhage (NL)
(74) Representative: V.O.
(86) International application number: PCT/NL2021/050228
(87) International publication number: WO 2021/206552

(56) References cited:
- CN-A- 110 566 630
- US-A1- 2009 008 504
- US-A1- 2018 266 461

## Description

The invention relates to a device and a method for mounting a load to a carrier and a method of producing the device. The invention also relates to an assembly and to a vehicle.

For a load mounted to a carrier, it is often desired to reduce transmission of vibrations from the carrier to the load. For example, a sensitive instrument on board a spacecraft may be subjected to strong vibrations during launch of the spacecraft. Such vibrations can cause damage to the instrument, resulting in reduced functionality and/or reliability of the instrument and possibly in damage to surrounding structures. As another example, in assemblies such as wafer steppers, a sensitive instrument may be subjected to large accelerations at one moment, before requiring precise positioning and orienting the next moment.

While the problem of heavy vibrations itself could be addressed by the use of suitably heavy shock breakers or spring-damper assemblies, this approach is generally not satisfactory, because the sensitive instrument generally requires very precise (re)positioning at least during some period without heavy vibrations. If the instrument would be mounted in a very flexible manner, this would clearly inhibit precise position control. Thus, a combination of protection from heavy vibrations and precise precision control is required in these and other applications. Furthermore, heavy shock breakers would be disadvantageous in spaceflight and other applications due to their large mass.

For example, shock-absorbing assemblies are known from US2009/0008504, CN110566630 and US2018/0266461. Such shock-absorbing assemblies use elastic and/or damping approaches.

US2009/008504 discloses a multi-axis device for isolation of the vibrations generated by vibrating equipment and transmitted to a supporting structure for this equipment. It presents examples that include longitudinal elastomer isolation studs that interconnect equipment supports. Deformations of the studs allow the transmission of low-amplitude vibrations and shocks generated by equipment on the platen to the supporting structure. In order to limit the deformations of the stud, when the supporting structure is subjected to high accelerations (e.g. when a satellite is launched), and, at the same time, to absorb the shocks and vibrations transmitted to the equipment mounted on the platen, the isolation device also comprises flexible buffers.

CN110566630 discloses a launch section vibration attenuation and orbital section vibration isolation integrated load supporting device which can realize the variable stiffness requirements of high stiffness and high damping in a launch section and low stiffness and low damping in an orbit section. An embodiment has a coil spring, that includes a further damper structure with two rubber pads and a piston.

US2018/0266461 discloses a device for shock absorbing attachment of two elements, utilizing tubular outer parts that tubular parts are connected by an intermediate elastomer layer. The elastomer layer, when seen in section in a longitudinal plane includes to either side of an attachment axis, at least three so-called longitudinal portions, and at least two so-called transverse portions.

Besides, a known solution has been published in De Vreugd, Jan, et al. "Damping in space constructions." 13th European Conference on Spacecraft Structures, Materials & Environmental Testing. Vol. 727. 2014. In this solution, an instrument or other load is mounted to a carrier using six solid metal struts, in particular one for each degree of freedom, wherein each strut is provided with a layer of damping material which partially covers the outside of the strut. The layer can be provided with a metal strip on an opposite side of the layer from the strut. During use, in particular under vibratory loads, the damping material is sheared and compressed, wherein kinetic energy is converted to heat, so that part of the vibrations are thereby absorbed. This approach is known as constrained layer damping (opposed to elastic vibration isolation wherein no energy is dissipated).

Such a configuration can provide precise precision control, in particular due to the solid struts. While such a configuration can also provide improved damping of vibrations compared to alternatives such as naked struts, there remains a need for further improvement. In particular better damping of vibrations in combination with precise positioning is desired.

Moreover, a disadvantage of the known solution is that the damping material is exposed to the environment, resulting in a risk of material, e.g. fragments, particular and/or molecular matter, being separated from the strut in the form of debris and/or contamination and causing damage, e.g. to an instrument and/or a respective carrier such as a vehicle.

Load transportation in general, and spaceflight in particular, requires reliable and durable mounting solutions with a small mass and preferably a small number of parts.

Thus, there is a need for an improved method of mounting a load to a carrier.

An object of the present invention is to provide an improved device and method for mounting a load to a carrier, in particular for transporting an instrument, e.g. an optomechanical instrument. An object is to provide such a device and method wherein heavy vibrations are better inhibited from affecting the load while still allowing precise positioning of the mounted load. An object is to provide such a device which is more reliable, more durable and relatively light-weight, and compact. An object is to reduce a risk of debris and/or contamination. An object is to at least partially solve at least one of the above-mentioned problems.

To this end, an aspect of the invention provides a device for mounting a load to a carrier. The device comprises a first support configured for fixation to the carrier and a second support configured for fixation to the load. The first and second supports are spaced away from each other viewed along a main load bearing axis of the device. The device comprises an outer shell extending along the main load bearing axis. The device comprises an inner member, preferably extending along the main load bearing axis, within the outer shell. A damping material connects the inner member to at least the outer shell, preferably at least directly and/or optionally via one or both of the first support and the second support. One of the outer shell and the inner member, preferably the outer shell, connects the first support and the second support directly to each other, to provide a direct load path between the supports.

The damping material is preferably a viscoelastic material and/or another material which is suitable for converting received mechanical forces, in particular oscillatory forces, to heat, thus for dissipating kinetic energy.

It has been found that such a device can provide improved damping of vibrations in combination with good position control of the load via the device, in particular when a plurality of such devices is used. Without wishing to be bound by theory, it is believed that the damping material is thus substantially constrained between the outer shell and the inner member (the damping material e.g. being a constrained layer) for converting vibration energy to heat via vibratory shear forces on the damping material, thereby dissipating the kinetic vibration energy. Meanwhile, for precise positioning, the outer shell or the inner member, whichever connects the first support and the second support to each other, can provide a direct load path between the load and the carrier. Said direct load path can thus have a relatively high stiffness, in particular in the absence of vibrations, resulting in the positioning being less affected by creep and/or hysteresis. Also, a substantially vibration dependent stiffness can thus advantageously be provided, with, in the absence of vibrations, a relatively high stiffness. The outer shell, in particular when it connects the first support and the second support to each other, can also protect the damping material from the environment and vice versa, thus reducing a risk of damage associated with debris and/or contamination.

The damping material preferably connects to an inner surface of the outer shell, and preferably also to an outer surface of the inner member (the damping material e.g. covering at least part of the outer surface of the inner member), wherein the damping material preferably connects continuously to each of the inner surface of the outer shell and the outer surface of the inner member.

This can enable a good transfer of vibrations to the damping material and transfer of heat from the damping material to the environment for efficient dissipation of energy.

The outer shell and the inner member may be arranged substantially in parallel (for example providing opposite parallel surfaces that are connected by the damping material). Preferably, the outer shell and the inner member are arranged in parallel with and/or concentric with respect to the main load bearing axis.

In this way, the device can operate well under axial loads.

Similarly, the damping material (e.g. damping layer) as such preferably extends in parallel with the main load bearing axis.

When the outer shell connects the first support and the second support to each other, the inner member may be spaced away from one of the first support and the second support, wherein the inner member is fixed, in particular directly, to the other of the first support and the second support.

Such a configuration can provide efficient and effective absorption of vibrations in the damping material.

The damping material may be spaced away from one of the first support and the second support, wherein preferably said damping material is arranged at an axial end section of the inner member, wherein preferably at least part of an inner space of the outer shell is filled with a fluid, e.g. a gas or gas mixture. Alternatively or additionally at least part of said inner space may be a vacuum.

In this way, the damping material can be arranged in an area with relatively large vibratory displacements between the outer shell and the inner member, resulting in improved vibration absorption.

Preferably, at least one of the inner member and the outer shell is provided with a surface enhancing structure, for example one or more recesses and/or protrusions, e.g. fins, which are in contact with the damping material, wherein said recesses and/or protrusions preferably extend substantially laterally or radially with respect to the main load bearing axis.

Such a surface enhancing structure can provide an increased contact surface area with the damping material, thus providing increased shear force on the damping material.

In particular, the inner member and the outer shell can each be provided with respective surface enhancing structures, e.g. mating recesses and/or protrusions. Preferably, the respective surface enhancing structures of the inner member extend radially or laterally outward from the main load bearing axis and the respective surface enhancing structures of the outer shell extend radially or laterally inwardly towards the main load bearing axis, in particular between the surface enhancing structures of the inner member. Preferably, viewed in a transversal plane, the surface enhancing structures of the inner member and the surface enhancing structures of the outer shell are interdigitatingly arranged around the main load bearing axis.

In this way, damping material can be effectively constrained and loaded between the outer shell and the inner member, in particular in a compact way, wherein relatively large contact surface areas of the damping material can be provided in a relatively small space.

A compliance (e.g. axial compliance) of the outer shell may be substantially different from, preferably larger than, a compliance (e.g. axial compliance) of the inner member, in particular under vibratory loads.

Such a design can enable effective shear loading of the damping material under vibratory (e.g. axial) loads.

Alternatively or additionally, a compliance of the outer shell may be substantially different from, preferably smaller than, a compliance of a combination of the inner member and the damping material, in particular in absence of vibratory loads.

Such a design can inhibit hysteresis and enable good dimensional stability, in particular substantially irrespective of gradual deformation, such as creep, in the damping material.

The outer shell may comprise a more compliant section and a less compliant section which sections are (e.g. axially_ adjacent to each other. Preferably, the (e.g. axial) strength of the more compliant section is substantially equal to or exceeds the (e.g. axial) strength of the less compliant section. The more compliant section may comprise a flexure, for example an array of flexures.

In this way, the more compliant section can provide that the overall compliance of the outer shell is larger than the compliance of the inner member, while the less compliant section can provide a stable interface for the damping material, for example.

The damping material may be arranged at an (e.g. axial) end section of the inner member, wherein the end section of the inner member (e.g. axially) substantially coincides with the (e.g. axially) less compliant section of the outer shell.

Thus, the damping material can be arranged in an area where it can receive relatively large shear forces.

The outer shell and the inner member are preferably made of substantially the same material, in particular a metal or a metal alloy, preferably comprising titanium, stainless steel and/or aluminium.

In this way the device can be particularly stable and durable under challenging conditions such as launch and spaceflight, and/or for a large number of vibration cycles such as on a lithographic apparatus, e.g. a wafer stepper.

The damping material can be a rubber material, in particular a vulcanized rubber material, for example Isoloss^{®}, Smactane^{®}, Sorbothane^{®} and/or SCVBR^{®}.

Such a material can provide above-described features regarding the damping material.

The device may include a layer of damping material (the layer in particular being constrained between an inner surface of the outer shell and an outer surface of the inner member). The layer preferably has a layer thickness relative to an axial length of the outer shell in the range of 0.1% to 10%, more preferably in the range of 0.5% to 5%, more preferably in the range of 1% to 3%, for example about 2%. Alternatively or additionally the layer may have a layer thickness smaller than 5 mm, for example a thickness in the range of 0.1-2 mm. Alternatively or additionally, measured in a plane transversal to the main load bearing axis, the layer may have a layer cross-sectional surface area relative to a total device cross-sectional surface area in the range of 10% to 50%, preferably in the range of 25% to 35%, for example about 30%.

Particularly good damping of vibrations in combination with stable positioning can be provided in this way.

A further aspect of the invention provides an assembly comprising one or more devices as described above and a carrier and/or a load, wherein the respective first and/or second support of the or each device is fixed to the carrier and/or to the load.

Such an assembly can provide above-mentioned advantages.

The assembly is preferably configured to form a substantially statically determinate structure, wherein in particular the load is statically determinately mounted to the carrier. The load may comprise an optomechanical instrument. The carrier may comprise or be attached to a vehicle, e.g. a spacecraft, or a wafer stepper. The present invention can find particular benefit in such an assembly.

Preferably, the number of devices of the one or more devices is at least three, for example six.

The respective main load bearing axis of each of the at least three devices is preferably oriented differently compared to the other devices of the at least three devices.

In this way, for example, one device can be provided for each degree of freedom.

The main load bearing axes (A) of the devices may be oriented to intersect one or more rotational axes of the load and/or a center of gravity of the load. A substantially statically determinate structure can be formed in this way.

A further aspect of the invention provides a vehicle, in particular a spacecraft, comprising an assembly as described above, wherein the carrier is attached to the vehicle or forms part thereof. Preferably, the vehicle is configured to cooperate with a launcher.

Such a vehicle can provide above-mentioned advantages, wherein an instrument as a load can be safely and reliably transported to space and wherein said instrument can be precisely positioned e.g. with respect to the carrier.

A further aspect of the invention provides a method of mounting a load to a carrier. The method of mounting comprises: providing a device as described above; fixing the load and one of the first support and the second support of the device to each other; and fixing the carrier and the other of the first support and the second support of the device to each other.

Such a method can provide above-mentioned advantages.

A further aspect of the invention provides a method of producing a device as described above. This method of producing comprises providing a mold configured to be at least part of the outer shell and providing at least part of the inner member in the mold. This method of producing further comprises supplying a substantially liquid damping material in the mold and at least partially, preferably substantially, solidifying the supplied damping material in the mold, thereby preferably bonding the damping material to the inner member and to the mold (i.e. the damping material can adhere to both the inner member and the mold). It will be appreciated that alternatively or additionally a bonding agent, e.g. an adhesive, which is different from the damping material may be used for bonding the damping material to the inner member and/or to the mold.

A device according to an aspect of the invention can thus be produced reliably and relatively easily, wherein the damping material can be supplied relatively easily in a (more) liquid form and wherein the damping material can subsequently be reliably bonded in place, thus ensuring a good connection and preventing subsequent displacement, e.g. flowing away, of the material.

The at least partial solidifying may comprise vulcanization, wherein in particular the damping material is a rubber material.

Good damping properties of the material can be obtained in this way with good adhesion of the material to the outer shell and to the inner member.

Before the supplying, the at least part of the inner member may be fixed to the mold, e.g. both forming part of a same monolithic structure. The method further optionally comprises separating the at least part of the inner member from the mold, e.g. by removing a connecting part of the monolithic structure.

Precise and stable position of the inner member with respect to e.g. the outer shell can thus be realized, as well as precise dimensioning of the damping material, e.g. of a layer thickness thereof.

At least one of the first support, the second support, the outer shell and the inner member can be produced using additive manufacturing, in particular from a metal or metal alloy, for example comprising titanium, stainless steel and/or aluminium.

The devices can thus be produced with good precision, for example with dimensions customized to the relevant load and/or carrier.

In the following, the invention will be explained further using exemplary embodiments and drawings. The drawings are schematic. In the drawings, similar or corresponding elements have been provided with similar or corresponding reference signs. In the drawings:
Fig. 1 shows a partially opened perspective view of a first exemplary device for mounting a load to a carrier;
Fig. 2a shows a longitudinal cross section view of a second exemplary device for mounting a load to a carrier;
Fig. 2b shows a longitudinal cross section view of a third exemplary device for mounting a load to a carrier;
Fig. 3a shows an isometric view of a first monolithic preform for a fourth exemplary device for mounting a load to a carrier;
Fig. 3b shows a longitudinal cross section view of the first preform of Fig. 3a;
Fig. 4a shows an isometric view of a second monolithic preform for the fourth exemplary device of Fig. 3a;
Fig. 4b shows a longitudinal cross section view of the second preform of Fig. 4a;
Fig. 4c shows a transversal cross section view of the second preform along the line IVc-IVc in Fig. 4b;
Fig. 5 shows an exemplary vehicle with an exemplary assembly;
Figure 6A shows a perspective view of a further embodiment of a device for mounting a load to a carrier;
Figure 6B shows a longitudinal cross-section of the embodiment of Fig. 6A;
Figure 7A shows a perspective view of part of a yet another embodiment of a device for mounting a load to a carrier;
Figure 7B shows a opened-up view of the embodiment of Fig. 7A; and
Figure 8 shows a perspective view of part of a further embodiment of a device for mounting a load to a carrier.

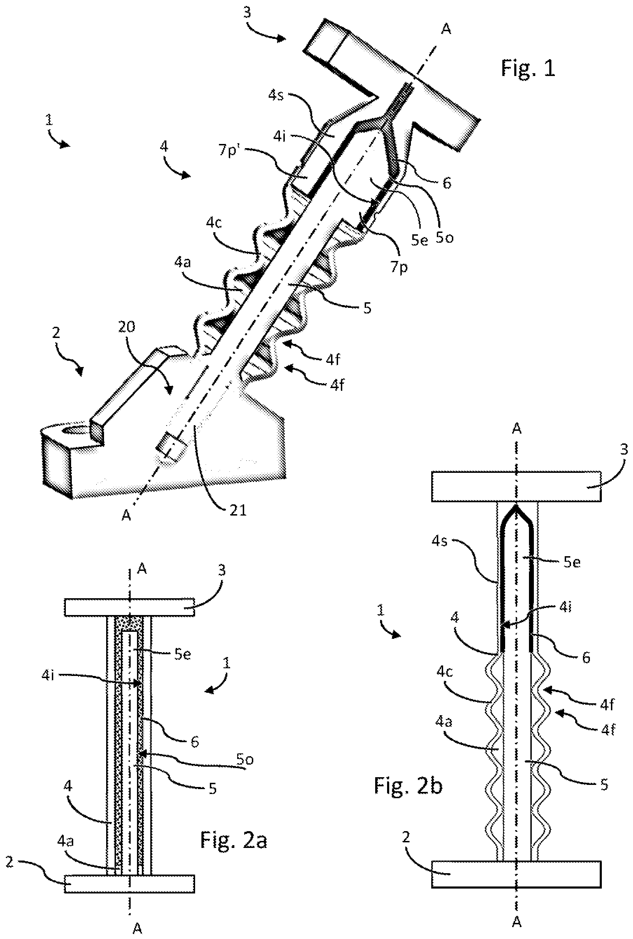

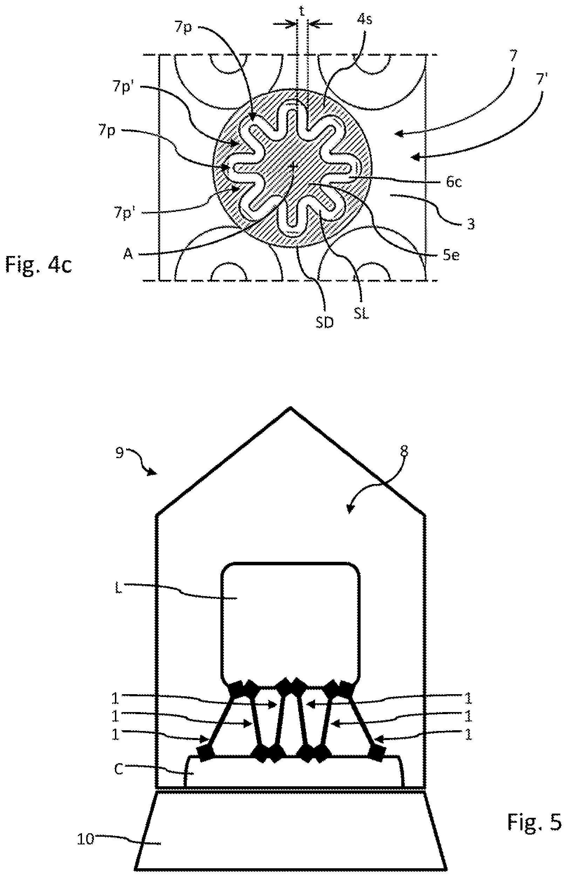

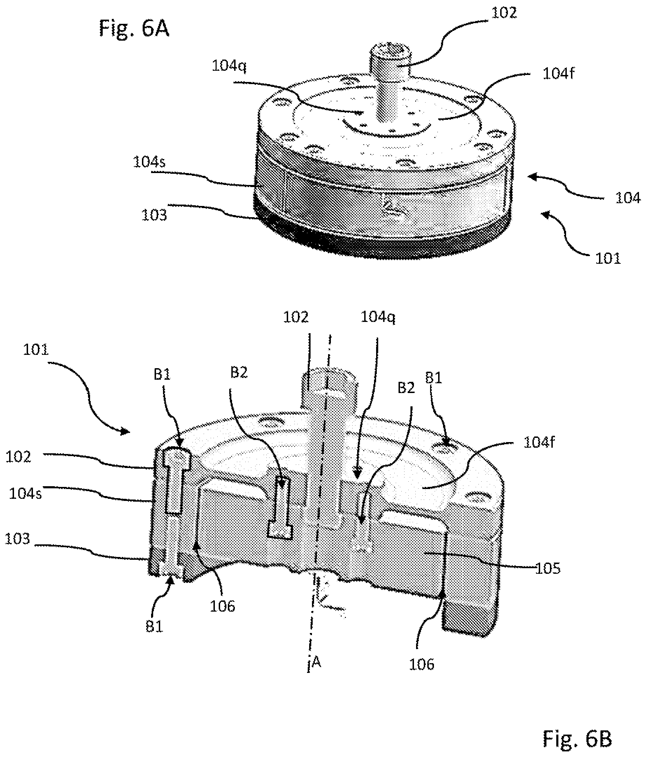

Figs. 1, 2a and 2b each show a device 1 for mounting a load L to a carrier C. Fig. 5 shows an assembly 8 comprising six of such devices 1 each being connected to a load L and a carrier C. Further examples are depicted in Figures 6-8.

The device 1 comprises a first support 2 configured for fixation to the carrier C and a second support 3 configured for fixation to the load L. The first and second supports 2, 3 are spaced away from each other viewed along a main load bearing axis A of the device 1. The device 1 comprises an outer shell 4 extending along the main load bearing axis A, said outer shell 4 connecting the first support 2 and the second support 3 to each other. It follows that the outer shell 4 can provide a direct load path between the first support 2 and the second support 3. The outer shell 4 can be fixed directly to each of the supports 2, 3 (as in the depicted examples), for example via bolting connections, welding connections and/or be integrated with one or both of the supports 2, 3.

The outer shell 4 as such can be configured in various ways as will be appreciated by the skilled person (as follows from the various non-limiting embodiments that are disclosed). In particular, the outer shell 4 (which can also be called e.g. an outer member, outer wall, outer structure or outer element) can be configured to define or surround an inner space.

The device 1 comprises an inner member 5, preferably extending along the main load bearing axis A, within the outer shell 4 (i.e. within an inner space of the outer shell 4). The inner member 5 as such can also be configured in various ways as will be appreciated by the skilled person (as follows from the various embodiments that are disclosed). In particular, the inner member 5 (which can also be called e.g. an inner element, inner structure, inner wall, or damping material support) can be configured to be received within the outer shell 4.

The device 1 comprises a damping material 6 connecting the inner member 5 to at least the outer shell 4, for example directly (as in the present embodiment) and/or via one or both of the first support 2 and the second support 3. It is preferred that the damping material 6 is constrained between an inner surface 4i the outer shell 4 and an opposite outer surface 5o of the inner member 5 (see e.g. Figures 1a, 1b, 2). In particular, the damping material 6 connects to the outer shell 4 as well as to the inner member 5, preferably such that axial displacement of the inner member 5 with respect to the outer shell 4 (i.e. along a load bearing axis) leads to shearing of the damping material 6, wherein kinetic energy is converted to heat, so that part of the vibrations are thereby absorbed. As is mentioned before, this approach is known as constrained (layer) damping, opposed to vibration isolation. For example, the damping material 6 can (at least partly) fill an interior space or slit that can be present between the outer shell 5 and the inner member 4.

As shown in the examples of Figs. 1, 2a and 2b, the damping material 6 preferably connects to an inner surface 4i of the outer shell 4. Such a connection is preferably provided by an adhesive property of the damping material 6 itself. To that end, the damping material 6 can be a curable material which can adhere (e.g. bond) to another material (i.e. the inner surface 4i and preferably a surface 5o of the inner member 5) upon curing of the damping material 6. The damping material 6 can thus (directly) connect to the inner surface 4i of the outer shell as well as to the inner member 5, preferably substantially continuously along each respective surface, resulting in a good transfer of mechanical energy from said surfaces to the damping material 6 as well as preferably good heat dissipation from the damping material 6 to the environment via said surfaces.

The outer shell 4 and the inner member 5 are shown can be arranged substantially in parallel, and in parallel with (and e.g. concentric with respect to) the main load bearing axis A. For example the outer shell 4 and inner member 5 can have respective opposite contact surfaces 4i, 5o that surround the damping material (and connect to the damping material) 6, which contact surfaces 4i, 5o can extend in parallel with parallel with (and e.g. concentric with respect to) the main load bearing axis A

It follows that, similarly, the damping material (e.g. damping layer) 7 as such preferably extends in parallel with the main load bearing axis A. The same can hold for an interior space (or slit) between the outer shell 4 and inner member 5 that is filled with the damping material 7.

In the examples, the inner member 5 is spaced away from the second support 3 (i.e. it is not fixed to the second support 3), wherein the inner member 5 is fixed, in particular directly, to the first support 2. It follows that, in that case, the inner member 5 does not provide a direct load path between the first support 2 and the second support 3. The inner member 5 can be fixed directly the first support 2 (as in the depicted examples), for example via bolting connections, welding connections and/or be integrated with the support 2.

It will be appreciated that alternatively the inner member 5 may be spaced away from the first support 2 and fixed (directly) to the second support 3, for example.

As shown, the damping material 6 is spaced away from the first support 2, said material 6 being arranged at an axial end section 5e of the inner member 5. At least part of an inner space 4a of the outer shell 4 can be filled with a fluid, e.g. a gas or gas mixture, in particular a part that is not occupied by the damping material 6. Alternatively or additionally at least part of said inner space 4a can be a vacuum. It follows that preferably, the damping material 6 covers only part of the outer surface of the inner member 5.

Optionally (not shown) the damping material 6 is substantially confined to one or more spaces where respective contact surface areas of the outer shell 4 and the inner member 5 extend substantially in parallel with the main load bearing axis A of the device 1. It has been found that damping behavior can thus be further enhanced. To realize such confinement, part of the damping material may be removed, in particular a part or parts outside said one or more spaces. Such removal may be carried out after solidification, e.g. by post-machining, wherein e.g. one or more other parts of the device 1, such as a sprue 11s (see below), are removed at the same time.

With particular reference to Fig. 4c, i.e. in particular viewed in a lateral cross-section of the device 1, the inner member 5 and the outer shell 4 are preferably each provided with a surface enhancing structure 7, 7', in this case mating protrusions 7p, 7p', e.g. fins, which are in contact with the damping material 6. The shown protrusions 7p, 7p' extend substantially laterally or radially with respect to the main load bearing axis A. Respective recesses can be seen between each neighboring pair of protrusions 7p, as well as between each neighboring pair of protrusions 7p'. Alternatively, only one of the inner member 5 and the outer shell 4 is provided with a surface enhancing structure, for example.

As shown in Fig. 4c, the respective surface enhancing structures 7 of the inner member 5 can extend radially outward from the main load bearing axis A and the respective surface enhancing structures 7' of the outer shell 4 extend radially inwardly towards the main load bearing axis A, in particular between the surface enhancing structures 7 of the inner member 5.

Viewed in a transversal plane, as in Fig. 4c, the surface enhancing structures 7 of the inner member 5 and the surface enhancing structures 7' of the outer shell 4 can be interdigitatingly arranged around the main load bearing axis A. As shown, each protrusion 7p is thus arranged between neighboring protrusions 7p' (substantially in a recess formed therebetween), and similarly each protrusion 7p' is arranged between neighboring protrusions 7p (substantially in a recess formed therebetween).

With further reference to the examples of Figs. 1 and 2b, the device can be configured such that an axial compliance of the outer shell 4 is larger than an axial compliance of the inner member 5, in particular under vibratory loads. In this context, an axial compliance can be understood as a compliance under axial loads, i.e. loads which are directed substantially along the main load bearing axis A (see Figs. 1, 2b).

Meanwhile, in the present configuration, an axial compliance of the outer shell 4 is accordingly smaller than an axial compliance of a combination of the inner member 5 and the damping material 6 in absence of such vibratory loads. In Figs. 1 and 2b, the outer shell 4 can be seen as comprising a more compliant section 4c and a less compliant section 4s which sections are axially adjacent to each other. By contrast, the example of Fig. 2a does not show such sections. Accordingly, in a basic embodiment, a compliance of the outer shell 4 may be substantially constant throughout the outer shell 4.

It will be appreciated that an axial compliance of the outer shell 4 may be substantially equal to an axial compliance of the inner member 5. It will also be appreciated that such axial compliances and/or such differences may be substantially independent of characteristics of loads, e.g. being substantially equal under vibratory loads compared to non-vibratory loads.

The axial strength of the more compliant section 4c is preferably substantially equal to or exceeds the axial strength of the less compliant section 4s.

In the shown examples (see Figs. 1 and 2b), the more compliant section 4c can comprise a flexure 4f, in particular an axial array of flexures 4f. Two examples of such flexures 4f have been indicated in each of Figs. 1, 2b, 3a and 3b. It will be appreciated that the shown structures can be considered to comprise an array of more such flexures 4f, wherein the array forms a combined flexure which is designed for compliance under substantially axial loads.

In an example which is not shown, the inner member 5 can be provided with at least one respective flexure, for example in the form of a circumferential notch, in particular at a distance from the damping material 6, for example adjacent to a connection between the inner member 5 and the first support 2. It has been found that such a flexure of the inner member 5 can advantageously provide increased bending compliance of the inner member, which can promote shearing of the damping material during use, as opposed to compression thereof. Such a configuration can thus make the device's damping performance less dependent on a potentially variable alignment between the load L and the main load bearing axis A.

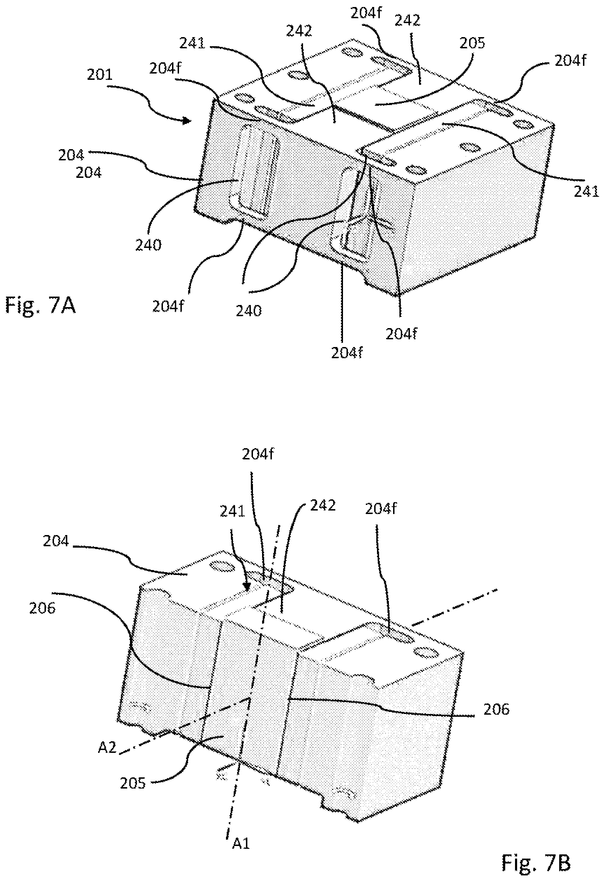

As previously explained, the damping material 6 is shown to be preferably arranged at an axial end section 5e of the inner member 5. The examples of Figs. 1 and 2b show that this axial end section 5e of the inner member 5 axially substantially coincides with the axially less compliant section 4s of the outer shell 4. As follows from Figures 7-8, the damping material 6 can also be arranged differently.

In the examples, the outer shell 4 and the inner member 5 can be made of substantially the same material, in particular a metal or a metal alloy, preferably comprising titanium, stainless steel and/or aluminium.

The damping material 6 is preferably a rubber material, in particular a vulcanized rubber material, for example Isoloss^{®}, Smactane^{®}, Sorbothane^{®} and/or SCVBR^{®}.

The damping material 6 can be seen as arranged substantially in the form of a layer of said material 6, for example a layer that is arranged in parallel with the main loading axis A. This layer has a layer thickness t for which an example of measurement is indicated in Fig. 4c as a width of a respective cavity 6c in which the layer can be formed.

The layer thickness t can be designed in various ways. First, a layer thickness t can be designed relative to an axial length of the outer shell, wherein the thickness t is in the range of 0.1% to 10%, more preferably in the range of 0.5% to 5%, more preferably in the range of 1% to 3%, for example about 2%. Alternatively or additionally, the layer thickness t can be smaller than 5 mm, for example a thickness in the range of 0.1-2 mm. Alternatively or additionally, the layer thickness t can be designed such that measured in a plane transversal to the main load bearing axis A, a layer cross-sectional surface area SL relative to a total device cross-sectional surface area SD in the range of 10% to 50%, preferably in the range of 25% to 35%, for example about 30%.

Fig. 5 shows an exemplary assembly 8 comprising six devices 1 and a carrier C and a load L. The respective first support 2 of each device 1 is fixed to the carrier C while the respective second support 3 is fixed to the load L. It will be appreciated that alternatively the first support 2 may be fixed to the load L while the second support 3 is fixed to the carrier C.

The assembly 8 can be configured to form a substantially statically determinate structure, wherein in particular the load L is statically determinately mounted to the carrier C. Options for providing such static determinacy as such are known to the skilled person, e.g. in the context of mounting a load to a carrier using traditional struts.

The load L may comprise an optomechanical instrument. The carrier C may comprise or be attached to a vehicle 9, e.g. a spacecraft. Alternatively, the carrier may comprise or be attached to a wafer stepper (not shown), for example, among other options.

As schematically indicated in Fig. 5, the respective main load bearing axis A (see e.g. Figs. 1, 2a and 2b) of each of the six devices 1 is oriented differently compared to the other of the six devices 1. It will be appreciated that in this context, oriented differently refers to three-dimensional orientation. Thus, while the respective axes A of two devices 1 may be substantially parallel in two dimensions, they are then preferably aligned differently (not parallel) in the third dimension. As will be appreciated by the skilled person, the main load bearing axes A can thus be oriented to intersect one or more rotational axes of the load L and/or a center of gravity of the load L.

Fig. 5 also shows an example of a vehicle 9, in particular a spacecraft, comprising the assembly 8, wherein the carrier C is attached to the vehicle 9 or forms part thereof. The exemplary vehicle 9 is configured to cooperate with a launcher 10.

With continued reference to Fig. 5, an exemplary method of mounting a load L to a carrier C, comprises: providing a device 1; fixing the load L and one of the first support 2 and the second support 3 of the device 1 to each other; and fixing the carrier C and the other of the first support 2 and the second support 3 of the device 1 to each other. As explained above and shown in Fig. 5, preferably six devices are thus used, wherein the main axis A of each device is preferably oriented differently.

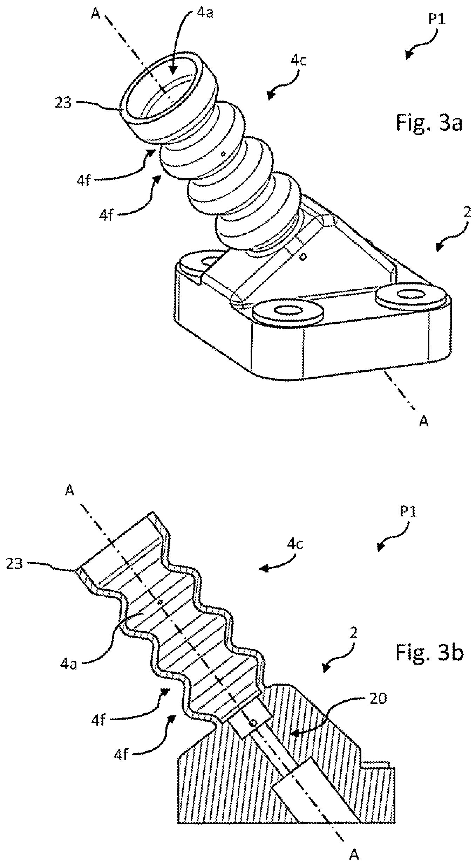

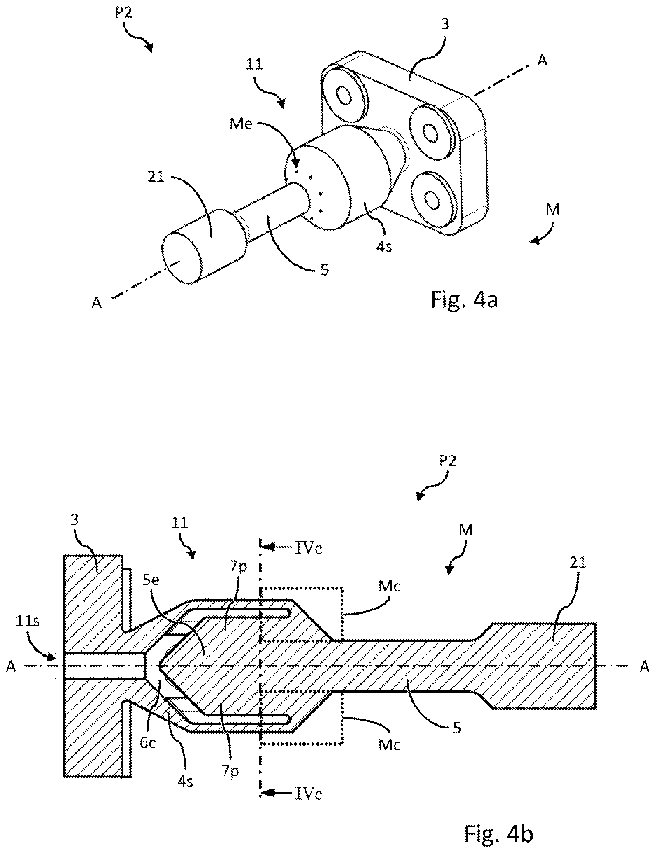

Figs. 3a, 3b, 4a, 4b and 4c illustrate a method of producing an exemplary device 1, wherein Figs. 3a and 3b show a first monolithic preform P1 for a device 1 and Figs. 4a, 4b and 4c show a second monolithic preform P2 for the device 1, the first and second monolithic preform being usable together in a method of producing an exemplary device 1.

The method of producing comprises providing a mold 11 (see Figs. 4a, 4b) configured to be at least part 4s of the outer shell 4. In the example, the mold 11 is part of the second monolithic preform P2. The method comprises providing at least part of the inner member 5 in the mold 11, for example as part of the same second monolithic preform P2.

The method comprises supplying a substantially liquid damping material 6, in particular a curable and/or settable material, in the mold 11. To that end, the mold 11 is shown to provide a respective cavity 6c (see Figs. 4b, 4c) in which the damping material can be received 6 and solidified. The cavity 6c is therefore dimensioned according to the design of the eventually solidified damping material 6, e.g. to form a layer of said material, see e.g. a layer thickness t indicated in Fig. 4c. A sprue 11s is shown in Fig. 4b for supplying the liquid material into the cavity 6c. The sprue 11s can be closed off, e.g. using a plug (not shown), after supplying the damping material 6 in the cavity 6c. Alternatively or additionally (not shown), the sprue 11s can be partially or entirely removed after such supplying, e.g. removed by machining.

As shown in Fig. 4a, the mold 11 may be provided with one or more air exit openings Me which allow air to escape from the cavity 6c when the damping material is supplied therein.

The method comprises at least partially, preferably substantially, solidifying, e.g. curing and/or setting, the supplied damping material 6 in the mold 11, thereby preferably bonding (i.e. adhesing) the damping material 6 to the inner member 5 and to the mold 11.

The at least partial solidifying preferably comprises vulcanization, wherein in particular the damping material 6 is a rubber material.

Before the supplying, and possibly thereafter, the at least part of the inner member 5 is fixed to the mold 11, e.g. both forming part of a same monolithic structure M, as shown in Fig. 4b, for example.

The at least part of the inner member 5 can subsequently be separated from the mold 11 by removing a connecting part Mc (see Fig. 4b) of the monolithic structure M. The above-mentioned air exit openings Me may extend substantially in, and thus be removed together with, said connecting part Mc. After such separation, the inner member 5 can remain connected to the mold 11 via the solidified damping material 6, e.g. to a part 4s of the mold 11 which can form part of the outer shell 4.

In the example, an axial connecting end 21 of the inner member 5 can subsequently be fixed, e.g. screwed, to a respective receiving structure 20 of the first monolithic preform P1. To that end, one or both of said connecting end 21 and receiving structure 20 may be provided with a respective threaded structure, e.g. formed by machining. Alternatively or additionally one or more separate bolts may be used, among other options. In a particularly advantageous alternative, a single bolt or the-like may be used to fix the carrier C (or the load L) both to the first support 2 and to the inner member 5, such that the inner member 5 is thus fixed to the first support 2 via said a single bolt which also connects the device 1 to the carrier C or the load L.

Thereafter, an axial end 23 of an outer shell part 4c the first monolithic preform P1 can be fixed, e.g. welded, to a respective outer shell part 4s for forming the overall device 1. Either or both of the preforms P1, P2 may be prepared for thus joining them together prior to said joining, in particular by a precision machining step, e.g. by thus providing one or more threaded structures for joining the parts 20 and 21.

The first support 2, the second support 3, the outer shell 4 and the inner member 5 can thus be produced using additive manufacturing, in particular from a metal or metal alloy, e.g. comprising titanium, stainless steel and/or aluminium, in particular additive manufacturing of two corresponding monolithic preforms P1, P2 of which at least one can be used as a mold for providing the damping material, wherein the preforms P1, P2 or respective intermediate products are subsequently joint together to form the device 1.

It will be appreciated that instead of two separate monolithic preforms P1, P2, a single combined monolithic preform (not shown) can be used. Such a single preform may provide a combination of the structures of separate preforms P1, P2, for example. With reference to Figs. 1 and 4b, such a single preform may include a cavity which corresponds to cavity 6c in Fig. 4b. In that case the single preform preferably includes a suitable obstruction to prevent flowable damping material from entering a space which corresponds to the inner space 4a in Fig. 1. Such an obstruction can subsequently be removed, e.g. by machining or otherwise, after solidification of the damping material.

Thus there is provided an improved device and method for mounting a load to a carrier, which device can be advantageously produced as described above. As will be clear to the skilled person, the device can additionally or alternatively be produced using one or more different methods, for example without additive manufacturing, for example using one or more (additional) molding processes and/or using a milling process.

Figures 6A, 6B depict another non-limiting example of a device 101 for mounting a load L to a carrier C, in particular configured to utilize constrained layer damping.

An outer shell 104 is fixed to each of the supports 102, 103, e.g. via respective bolting connections B1, adhesive, welding or the-like. An inner member 105 is fixed to one of the supports 102, e.g. via second bolting connections B2 (and/or welding and/or adhesive), but not to the other support 103.

For example, the inner member 105 can be located centrally within the outer structure (shell) 104 (but that is not required). Optionally, the outer shell 104 can include a cylindrical shell section 4s (e.g. having a circle-cylindrical shape). Also, optionally, the inner member 104 can be a cylindrical structure (e.g. having a circle-cylindrical shape).

In this example, the outer shell can include a radially inward extending, e.g. disc shaped, flexural section 104f, that can be connected to the first support 102, e.g. via a central section 104q of the outer shell (the central section 104q being located within the flexural section 104f). Also, for example, the outer shell 104 can be connected to the inner member 105 on the inside only (e.g. via bolting means B2 and respective central section 104q of the outer shell 104).

An outer rim of flexural section 104f can e.g. be connected to the outer shell 104 (similar in function as the less compliant section 4s of the example in Figures 1-4).

For example, opposite surfaces of the shell section 104s of the outer shell 104 and inner member 105 can define a slit or inner space that is (partly or entirely) filled with the damping material 106, which material can be fixed/bonded to each of those opposite surfaces. In this way, above-mentioned advantages can be achieved.

Figures 7A, 7B show part of another example 201, which differs from the embodiment of Figures 6A, 6B in that instead of one load bearing axis, this device has two: A1 and A2, in particular provided by means of a combination of flexible elements or sections, in this case beam-like structures 204f made by providing apertures into the outer shell 204. Therefore less devices are needed in configuration and for some cases it results in better system performance or easier implementation.

For example, the outer shell 204 can be a block-shaped structure that encloses an inner space for receiving further integral shell sections 241 (two in this example), of each which is provided with (a layer) of damping material 206. Each of the damping material layers 206 is fixed (bonded) to the outer shell 204, at least to those shell sections 241 of the outer shell 204. Also, the an inner member 205 is received within the outer shell, between the one or more integral sections 241, wherein the inner member 205 is bonded to the one or more sections 241 of the outer shell 204 via the one or more damping material layers 206.

Furthermore, the outer shell 204 (e.g. its integral shell sections 241) can be connected to the inner member 205 e.g. by adhesive or bolted connections (not shown), similar to above embodiments.

For example, opposite walls of the outer shell can include one or more apertures 240 to define flexural beam-like structures 204f of the outer shell. In the present example, the flexural beams 204f extend normally with respect to a plane defined by two orthogonal loading axes A1, A2 of the present example. These beam-like structures 204f (or "flexural beams") can be similar in function as the flexural membrane section 104f of the example in Figures 6A, 6B and flexural part 4s of the embodiments of Figure 1-4, providing improved device performance. Due to its configuration, a relatively small number of these devices 201 can be applied to restrict/limit the number of degrees of freedom of a load.

A first support configured for fixation to the carrier C and a second support configured for fixation to the load L, are not depicted in Figures 7A, 7B. After assembly, the outer shell 204 can be connected e.g. to either the first support or to the second support (as e.g. in the above examples), in particular to provide a direct load path there-between (via respective integral flexural sections 204f), wherein the inner member 205 can be fixed to only one of the first support and the second support, so that above-mentioned advantages can be achieved.

The inner member 205 can have an angular cross-section (e.g. rectangular or square) but that is not required. For example, during vibrational loads the inner member 205 can slide within the outer shell 204 in directions (i.e. along axes) A1, A2 and combinations thereof, the outer shell 204 e.g. having the one or more flexures 204f that can constrain the movement and can instantiate proper shear loading of the damping material 206. Besides, it follows that constrained layer damping can be achieved in two orthogonal directions A1, A2, a second orthogonal direction being orthogonal with respect to a main load bearing direction.

In particular it follows that the device can be configured to provide at least a main loading axis A1 and at least an additional second loading axis A2 that is orthogonal with respect to the main loading axis A1. For example, an inner surface of the outer shell 204 and an opposite outer surface of the inner member 205 (the surfaces being connected by respective preferably damping material 206) can both extend along a plane that is in parallel with respect to a plane defined by main loading axis and the additional second loading axis A2 (the same holds for the damping material 206 that is located between those surfaces).

It also follows that the outer shell 204 can include a relatively thin region 204f, or membrane flexure, similar in function as flexure 4f of the example in Figures 1-4, providing above-mentioned advantages

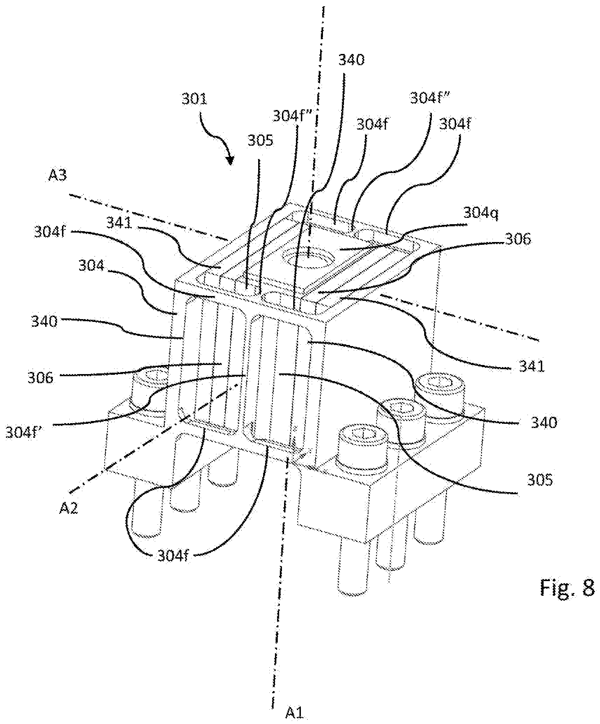

Figure 8 show part of another example 301, which differs from the embodiment of Figures 7A, 7B in that additional flexible elements (in this case integral flexural beam sections) 304f, 304f, 304f" have been included in the outer shell (via respective apertures 340 in respective shell walls) Also, relatively thick damping material pads 306 are provided along integral shell sections 341 (two in this example). Each of the damping material pads 306 can e.g. be fixed (bonded) to the outer shell 304, at least to those shell sections 341. The damping material pads preferably extend in directions of movement (e.g. in parallel with the plane constructed by extension of axes A1 and A2).

In particular, a number of integral flexural sections 304f of the shell can extend normally with respect to a first plane that is defined by two orthogonal loading axes A1, A2 of the present example. Further integral flexural sections 304f can extend e.g. in parallel with a first loading axis A1. For example, in each of two opposite side walls of the outer shell, a plurality of the integral flexural beam sections 304f, 304f can define an H-shaped flexural structure (as in Fig. 8). Also, for example, a number of integral flexural sections 304f" can extend e.g. in parallel with a second loading axis A2, towards a central section 304q of the outer shell 304q.

It follows that the outer shell 304 can include multiple apertures 340 for establishing/defining integral flexural elements 304f, 304f, 304f" e.g. to guide movements and instantiate shear loading on the viscoelastic material for vibration loads, preferably in three orthogonal directions (i.e. along respective axes) A1, A2 and A3. In this example, preferably, movement of a load or base in the depicted A3 direction (i.e. along the A3 axis) can lead to rotation around the A2 axis (because of the integral flexible shell elements ). As in above examples, the outer shell 304 can include an inner member 305 which can be bonded to the one or more sections 341 of the outer shell 304 via the one or more damping material layers 306. Thus, since additional flexible shell elements 304f, 304f, 304f" are applied, respective damping can be achieved in three orthogonal directions (i.e. along respective axis) A1, A2, A3, a third orthogonal direction being orthogonal with respect to the other bearing directions A1, A2.

In an embodiment, the damping can e.g. result from translation related and/or tilting related vibration or movement of the outer shell with respect to the inner member. Referring to Figure 8, as an example, external force applied to the system/device in a direction parallel with the A3 axis can lead to a tilting of the outer shell and respective internal inner member (the A2 axis e.g. being a tilting axis or being in parallel with the tilting axis), thereby shearing the intermediate damping material pads.

While the invention has been explained using exemplary embodiments and drawings, these do not limit the scope of the invention in any way, said scope being provided by the claims. It will be appreciated that many variations, alternatives and extensions are possible within said scope, as will be clear to the skilled person from the description and the drawings. A different number than six devices may be used for mounting a load to a carrier. An assembly comprising a device may be arranged in or on a vehicle without a launcher or on a different structure, e.g. in or on a building.

## Claims

1. Device (1) for mounting a load (L) to a carrier (C), configured to utilize constrained layer damping, comprising:
- a first support (2) configured for fixation to the carrier (C);
- a second support (3) configured for fixation to the load (L), the first and second supports (2, 3) being spaced away from each other viewed along a main load bearing axis (A) of the device (1);
- an outer shell (4) extending along the main load bearing axis (A);
- an inner member (5), preferably extending along the main load bearing axis (A), within the outer shell (4); and
- a damping material (6), preferably a viscoelastic material, connecting the inner member (5) to at least the outer shell (4), for example directly,
wherein one of the outer shell (4) and the inner member (5), preferably the outer shell (4), directly connects the first support (2) and the second support (3) to each other, to provide a direct load path between the first support (2) and the second support (3).

2. Device according to claim 1, wherein the damping material (6) connects to an inner surface (4i) of the outer shell (4), and preferably also connects to an opposite outer surface (5o) of the inner member, wherein the damping material (6) preferably connects continuously to each of the inner surface (4i) of the outer shell (4) and the outer surface (5o) of the inner member (5), wherein the damping material (6) preferably adheres to each of the outer shell (4) and to the inner member (5).

3. Device according to any of the preceding claims, wherein the outer shell (4) and the inner member (5) are arranged substantially in parallel, and preferably in parallel with and/or concentric with respect to the main load bearing axis (A).

4. Device according to any of the preceding claims, wherein the inner member (5) is spaced away from one of the first support (2) and the second support (3), wherein the inner member (5) is fixed, in particular directly, to the other of the first support (2) and the second support (3), wherein the outer shell (4) connects the first support (2) and the second support (3) to each other.

5. Device according to any of the preceding claims, wherein the damping material (6) is spaced away from one of the first support (2) and the second support (3),
wherein preferably said damping material (6) is arranged at an end section (5e) of the inner member (5),
wherein optionally at least part of an inner space (4a) of the outer shell (4) is filled with a fluid, e.g. a gas or gas mixture,
wherein optionally at least part of an inner space (4a) of the outer shell (4) is a vacuum.

6. Device according to any of the preceding claims, wherein at least one of the inner member (5) and the outer shell (4) is provided with a surface enhancing structure (7), for example one or more recesses and/or protrusions (7p), e.g. fins, which are in contact with the damping material (6),
wherein said recesses and/or protrusions (7p) preferably extend substantially laterally or radially with respect to the main load bearing axis (A).

7. Device according to any of the preceding claims, wherein the inner member (5) and the outer shell (4) are each provided with respective surface enhancing structures (7, 7'), e.g. mating recesses and/or protrusions (7p, 7p'),
wherein preferably the respective surface enhancing structures (7) of the inner member (5) extend radially or laterally outward from the main load bearing axis (A) and the respective surface enhancing structures (7') of the outer shell (4) extend radially or laterally inwardly towards the main load bearing axis (A), in particular between the surface enhancing structures (7) of the inner member (5),
wherein preferably, viewed in a transversal plane, the surface enhancing structures (7) of the inner member (5) and the surface enhancing structures (7') of the outer shell (4) are interdigitatingly arranged around the main load bearing axis (A) or extending interdigitatingly from a plane perpendicular to the main load bearing axis (A).

8. Device according to any of the preceding claims, wherein a compliance of the outer shell (4) is substantially different from, preferably larger than, a compliance of the inner member (5), in particular under vibratory loads.

9. Device according to any of the preceding claims, wherein the outer shell (4) comprises a more compliant section (4c) and a less compliant section (4s) which sections are adjacent to each other,
wherein preferably the strength of the more compliant section (4c) is substantially equal to or exceeds the strength of the less compliant section (4s),
wherein preferably the more compliant section (4c) comprises a flexure (4f), for example an array of flexures (4f) and/or integral flexural sections (104f; 204f; 304f, 304f, 304f').

10. Device according to any of the preceding claims, including a layer of damping material (6),
wherein preferably the layer has:
- a layer thickness (t) relative to an axial length of the outer shell in the range of 0.1% to 10%, more preferably in the range of 0.5% to 5%, more preferably in the range of 1% to 3%, for example about 2%; and/or
- a layer thickness (t) smaller than 5 mm, for example a thickness in the range of 0.1-2 mm; and/or
- measured in a plane transversal to the main load bearing axis (A), a layer cross-sectional surface area (SL) relative to a total device cross-sectional surface area (SD) in the range of 10% to 50%, preferably in the range of 25% to 35%, for example about 30%.

11. Device according to any of the preceding claims, configured to provide at least a main loading axis (A1) and at least an additional second loading axis (A2) that is orthogonal with respect to the main loading axis (A1), wherein an inner surface of the outer shell (204; 304) and an opposite outer surface of the inner member (205; 305) preferably extend along a plane that is in parallel with respect to a plane defined by main loading axis and the additional second loading axis (A2), wherein preferably, the outer shell (204; 304) includes at least one shell wall having one or more apertures(240; 340) to define a number of integral flexible elements or flexural sections on the wall, e.g. in beam like structures (204f; 304f, 304f, 304f').

12. Assembly (8) comprising one or more devices (1) according to any of the preceding claims and a carrier (C) and/or a load (L), wherein the respective first and/or second support (2 and/or 3) of the or each device (1) is fixed to the carrier (C) and/or to the load (L),
wherein preferably the assembly (8) is configured to form a substantially statically determinate structure, wherein in particular the load (L) is statically determinately mounted to the carrier (C),
wherein for example the load (L) comprises an optomechanical instrument,
wherein for example the carrier (C) comprises or is attached to a vehicle (9), e.g. a spacecraft, or a wafer stepper.

13. Vehicle (9), in particular a spacecraft, comprising an assembly (8) according to claim 12, wherein the carrier (C) is attached to the vehicle (9) or forms part thereof, wherein preferably the vehicle (9) is configured to cooperate with a launcher (10).

14. Method of mounting a load (L) to a carrier (C), comprising:
- providing a device (1) according to any one of claims 1 - 11;
- fixing the load (L) and one of the first support (2) and the second support (3) of the device (1) to each other; and
- fixing the carrier (C) and the other of the first support (2) and the second support (3) of the device (1) to each other.

15. Method of producing a device (1) according to any one of claims 1 - 11, comprising:
- providing a mold (11) configured to be at least part of the outer shell (4);
- providing at least part of the inner member (5) in the mold (11);
- supplying a substantially liquid damping material (6) in the mold (11); and
- at least partially, preferably substantially, solidifying the supplied damping material (6) in the mold (11), thereby preferably bonding the damping material (6) to the inner member (5) and to the mold (11).

## Patentansprüche

1. Vorrichtung (1) zur Befestigung einer Last (L) an einem Träger (C), ausgelegt zur Nutzung von Zwangsschichtdämpfung, umfassend:
- eine erste Stütze (2), ausgestaltet zur Befestigung am Träger (C);
- eine zweite Stütze (3), ausgestaltet zur Befestigung an der Last (L), wobei die erste und zweite Stütze (2, 3) bei Betrachtung entlang einer hauptlasttragenden Achse (A) der Vorrichtung (1) voneinander beabstandet sind;
- eine äußere Hülle (4), die sich entlang der hauptlasttragenden Achse (A) erstreckt;
- ein inneres Element (5), das sich vorzugsweise entlang der hauptlasttragenden Achse (A) erstreckt, innerhalb der äußeren Hülle (4); und
- ein Dämpfungsmaterial (6), vorzugsweise ein viskoelastisches Material, das das innere Element (5) mit mindestens der äußeren Hülle (4) verbindet, beispielsweise direkt,
wobei eine/s von der äußeren Hülle (4) und dem inneren Element (5), vorzugsweise die äußere Hülle (4), die erste Stütze (2) und die zweite Stütze (3) direkt miteinander verbindet, um einen direkten Lastpfad zwischen der ersten Stütze (2) und der zweiten Stütze (3) bereitzustellen.

2. Vorrichtung nach Patentanspruch 1, wobei das Dämpfungsmaterial (6) mit einer Innenfläche (4i) der äußeren Hülle (4) verbunden ist und vorzugsweise auch mit einer gegenüberliegenden Außenfläche (5o) des inneren Elements verbunden ist, wobei das Dämpfungsmaterial (6) vorzugsweise durchgehend mit jeder von der Innenfläche (4i) der äußeren Hülle (4) und der Außenfläche (5o) des inneren Elements (5) verbunden ist, wobei das Dämpfungsmaterial (6) vorzugsweise an sowohl der äußeren Hülle (4) als auch dem inneren Element (5) haftet.

3. Vorrichtung nach einem der vorhergehenden Ansprüche, wobei die äußere Hülle (4) und das innere Element (5) im Wesentlichen parallel und vorzugsweise parallel und/oder konzentrisch zur hauptlasttragenden Achse (A) angeordnet sind.

4. Vorrichtung nach einem der vorhergehenden Ansprüche, wobei das innere Element (5) von einer von der ersten Stütze (2) und der zweiten Stütze (3) beabstandet ist, wobei das innere Element (5) insbesondere direkt an der anderen von der ersten Stütze (2) und der zweiten Stütze (3) befestigt ist, wobei die äußere Hülle (4) die erste Stütze (2) und die zweite Stütze (3) miteinander verbindet.

5. Vorrichtung nach einem der vorhergehenden Ansprüche, wobei das Dämpfungsmaterial (6) von einer von der ersten Stütze (2) und der zweiten Stütze (3) beabstandet ist,
wobei vorzugsweise das Dämpfungsmaterial (6) an einem Endabschnitt (5e) des inneren Elements (5) angeordnet ist,
wobei optional wenigstens ein Teil eines Innenraums (4a) der äußeren Hülle (4) mit einem Fluid, beispielsweise einem Gas oder Gasgemisch, gefüllt ist,
wobei optional wenigstens ein Teil eines Innenraums (4a) der äußeren Hülle (4) ein Vakuum ist.

6. Vorrichtung nach einem der vorhergehenden Patentansprüche, wobei mindestens eine/s von dem inneren Element (5) und der äußeren Hülle (4) mit einer oberflächenverstärkenden Struktur (7) versehen ist, beispielsweise einer oder mehreren Ausnehmungen und/oder Vorsprüngen (7p), beispielsweise Rippen, die sich mit dem Dämpfungsmaterial (6) in Kontakt befinden,
wobei sich die Ausnehmungen und/oder Vorsprünge (7p) in Bezug auf die hauptlasttragende Achse (A) vorzugsweise im Wesentlichen seitlich oder radial erstrecken.

7. Vorrichtung nach einem der vorhergehenden Ansprüche, wobei das innere Element (5) und die äußere Hülle (4) jeweils mit entsprechenden oberflächenverstärkenden Strukturen (7, 7'), beispielsweise zueinander passenden Ausnehmungen und/oder Vorsprüngen (7p, 7p'), versehen sind,
wobei sich vorzugsweise die jeweiligen oberflächenverstärkenden Strukturen (7) des inneren Elements (5) radial oder seitlich von der hauptlasttragenden Achse (A) nach außen erstrecken und sich die jeweiligen oberflächenverstärkenden Strukturen (7') der äußeren Hülle (4) radial oder seitlich in Richtung der hauptlasttragenden Achse (A) nach innen erstrecken, insbesondere zwischen den oberflächenverstärkenden Strukturen (7) des inneren Elements (5),
wobei vorzugsweise, in einer Querebene betrachtet, die oberflächenverstärkenden Strukturen (7) des inneren Elements (5) und die oberflächenverstärkenden Strukturen (7') der äußeren Hülle (4) fingerartig ineinandergreifend um die hauptlasttragende Achse (A) angeordnet sind oder sich fingerartig ineinandergreifend von einer Ebene senkrecht zur hauptlasttragenden Achse (A) erstrecken.

8. Vorrichtung nach einem der vorhergehenden Patentansprüche, wobei eine Nachgiebigkeit der äußeren Hülle (4) wesentlich von einer Nachgiebigkeit des inneren Elements (5) verschieden, vorzugsweise größer als diese, ist, insbesondere unter Schwingungslasten.

9. Vorrichtung nach einem der vorhergehenden Patentansprüche, wobei die äußere Hülle (4) einen nachgiebigeren Abschnitt (4c) und einen weniger nachgiebigen Abschnitt (4s) umfasst, wobei die Abschnitte einander benachbart sind,
wobei vorzugsweise die Festigkeit des nachgiebigeren Abschnitts (4c) im Wesentlichen gleich der Festigkeit des weniger nachgiebigen Abschnitts (4s) ist oder diese übersteigt,
wobei vorzugsweise der nachgiebigere Abschnitt (4c) eine Biegung (4f) umfasst, beispielsweise eine Anordnung von Biegungen (4f) und/oder integralen Biegeabschnitten (104f; 204f; 304f, 304f', 304f'').

10. Vorrichtung nach einem der vorhergehenden Patentansprüche, umfassend eine Schicht aus Dämpfungsmaterial (6),
wobei die Schicht vorzugsweise aufweist:
- eine Schichtdicke (t) relativ zu einer axialen Länge der äußeren Hülle im Bereich von 0,1 % bis 10 %, stärker bevorzugt im Bereich von 0,5 % bis 5 %, stärker bevorzugt im Bereich von 1 % bis 3 %, beispielsweise etwa 2 %; und/oder
- eine Schichtdicke (t) kleiner als 5 mm, beispielsweise eine Dicke im Bereich von 0,1-2 mm; und/oder
- gemessen in einer Ebene quer zur hauptlasttragenden Achse (A), eine Schichtquerschnittsfläche (SL) im Verhältnis zu einer Gesamtvorrichtungsquerschnittsfläche (SD) im Bereich von 10 % bis 50 %, vorzugsweise im Bereich von 25 % bis 35 %, beispielsweise etwa 30 %.

11. Vorrichtung nach einem der vorhergehenden Patentansprüche, ausgestaltet zur Bereitstellung mindestens einer Hauptbelastungsachse (A1) und mindestens einer zusätzlichen zweiten Belastungsachse (A2), die in Bezug auf die Hauptbelastungsachse (A1) rechtwinklig verläuft, wobei sich eine Innenfläche der äußeren Hülle (204; 304) und eine gegenüberliegende Außenfläche des inneren Elements (205; 305) vorzugsweise entlang einer Ebene erstrecken, die in Bezug auf eine durch die Hauptbelastungsachse und die zusätzliche zweite Belastungsachse (A2) definierte Ebene parallel ist, wobei vorzugsweise die äußere Hülle (204; 304) mindestens eine Hüllenwand mit einer oder mehreren Öffnungen (240; 340) umfasst, um eine Anzahl integraler flexibler Elemente oder Biegeabschnitte an der Wand zu definieren, beispielsweise in trägerartigen Strukturen (204f; 304f, 304f', 304f'').

12. Anordnung (8), umfassend eine oder mehrere Vorrichtungen (1) nach einem der vorhergehenden Ansprüche und einen Träger (C) und/oder eine Last (L), wobei die jeweilige erste und/oder zweite Stütze (2 und/oder 3) der oder jeder Vorrichtung (1) am Träger (C) und/oder an der Last (L) befestigt ist,
wobei vorzugsweise die Anordnung (8) dazu ausgestaltet ist, eine im Wesentlichen statisch bestimmte Struktur zu bilden, wobei insbesondere die Last (L) statisch bestimmt am Träger (C) montiert ist,
wobei beispielsweise die Last (L) ein optomechanisches Instrument umfasst,
wobei beispielsweise der Träger (C) ein Fahrzeug (9), beispielsweise ein Raumfahrzeug, oder einen Wafer-Stepper umfasst oder daran befestigt ist.

13. Fahrzeug (9), insbesondere ein Raumfahrzeug, umfassend eine Anordnung (8) nach Patentanspruch 12, wobei der Träger (C) am Fahrzeug (9) angebracht ist oder einen Teil davon bildet, wobei vorzugsweise das Fahrzeug (9) dazu ausgestaltet ist, mit einer Startvorrichtung (10) zusammenzuwirken.

14. Verfahren zum Befestigen einer Last (L) an einem Träger (C), umfassend:
- Bereitstellen einer Vorrichtung (1) nach einem der Patentansprüche 1 bis 11;
- Befestigen der Last (L) und einer von der ersten Stütze (2) und der zweiten Stütze (3) der Vorrichtung (1) aneinander; und
- Befestigen des Trägers (C) und der anderen von der ersten Stütze (2) und der zweiten Stütze (3) der Vorrichtung (1) aneinander.

15. Verfahren zum Herstellen einer Vorrichtung (1) nach einem der Patentansprüche 1 bis 11, umfassend:
- Bereitstellen einer Form (11), dazu ausgestaltet, wenigstens ein Teil der äußeren Hülle (4) zu sein;
- Bereitstellen wenigstens eines Teils des inneren Elements (5) in der Form (11);
- Zuführen eines im Wesentlichen flüssigen Dämpfungsmaterials (6) in die Form (11); und
- zumindest teilweise, vorzugsweise im Wesentlichen, Verfestigen des zugeführten Dämpfungsmaterials (6) in der Form (11), wodurch vorzugsweise das Dämpfungsmaterial (6) mit dem inneren Element (5) und mit der Form (11) verbunden wird.

## Revendications

1. Dispositif (1) permettant de monter une charge (L) sur un support porteur (C), configuré pour utiliser un amortissement par couche contrainte, comprenant :
- un premier support (2) configuré pour être fixé au support porteur (C) ;
- un deuxième support (3) configuré pour être fixé à la charge (L), les premier et deuxième supports (2, 3) étant espacés l'un de l'autre lorsqu'ils sont observés le long d'un axe principal porteur de charge (A) du dispositif (1) ;
- une coque externe (4) s'étendant le long de l'axe principal porteur de charge (A) ;
- un élément interne (5), de préférence s'étendant le long de l'axe principal porteur de charge (A), à l'intérieur de la coque externe (4) ; et
- un matériau d'amortissement (6), de préférence un matériau viscoélastique, raccordant l'élément interne (5) au moins à la coque externe (4), par exemple directement,
dans lequel l'un parmi la coque externe (4) et l'élément interne (5), de préférence la coque externe (4), raccorde directement le premier support (2) et le deuxième support (3) l'un à l'autre, afin de fournir un chemin direct de transmission de charge entre le premier support (2) et le deuxième support (3).

2. Dispositif selon la revendication 1, dans lequel le matériau d'amortissement (6) se raccorde à une surface interne (4i) de la coque externe (4), et de préférence se raccorde également à une surface externe opposée (5o) de l'élément interne, dans lequel le matériau d'amortissement (6) se raccorde de préférence de façon continue à chacune parmi la surface interne (4i) de la coque externe (4) et la surface externe (5o) de l'élément interne (5), dans lequel le matériau d'amortissement (6) adhère de préférence à la coque externe (4) et à l'élément interne (5).

3. Dispositif selon l'une quelconque des revendications précédentes, dans lequel la coque externe (4) et l'élément interne (5) sont agencés sensiblement en parallèle, et de préférence en parallèle et/ou de manière concentrique par rapport à l'axe principal porteur de charge (A).

4. Dispositif selon l'une quelconque des revendications précédentes, dans lequel l'élément interne (5) est espacé de l'un parmi le premier support (2) et le deuxième support (3), dans lequel l'élément interne (5) est fixé, en particulier directement, à l'autre parmi le premier support (2) et le deuxième support (3), dans lequel la coque externe (4) raccorde le premier support (2) et le deuxième support (3) l'un à l'autre.

5. Dispositif selon l'une quelconque des revendications précédentes, dans lequel le matériau d'amortissement (6) est espacé de l'un parmi le premier support (2) et le deuxième support (3),
dans lequel de préférence ledit matériau d'amortissement (6) est agencé au niveau d'une section d'extrémité (5e) de l'élément interne (5),
dans lequel facultativement au moins une partie d'un espace interne (4a) de la coque externe (4) est remplie d'un fluide, par exemple un gaz ou un mélange gazeux,
dans lequel facultativement au moins une partie d'un espace interne (4a) de la coque externe (4) est sous vide.

6. Dispositif selon l'une quelconque des revendications précédentes, dans lequel au moins l'un parmi l'élément interne (5) et la coque externe (4) est pourvu d'une structure d'augmentation de surface (7), par exemple un ou plusieurs évidements et/ou saillies (7p), par exemple des ailettes, qui sont en contact avec le matériau d'amortissement (6),
dans lequel lesdits évidements et/ou saillies (7p) s'étendent de préférence sensiblement latéralement ou radialement par rapport à l'axe principal porteur de charge (A).

7. Dispositif selon l'une quelconque des revendications précédentes, dans lequel l'élément interne (5) et la coque externe (4) sont chacun pourvus de structures d'augmentation de surface (7, 7') respectives, par exemple des évidements et/ou saillies complémentaires (7p, 7p'),
dans lequel de préférence les structures d'augmentation de surface (7) respectives de l'élément interne (5) s'étendent radialement ou latéralement vers l'extérieur à partir de l'axe principal porteur de charge (A) et les structures d'augmentation de surface (7') respectives de la coque externe (4) s'étendent radialement ou latéralement vers l'intérieur en direction de l'axe principal porteur de charge (A), en particulier entre les structures d'augmentation de surface (7) de l'élément interne (5),
dans lequel de préférence, observées dans un plan transversal, les structures d'augmentation de surface (7) de l'élément interne (5) et les structures d'augmentation de surface (7') de la coque externe (4) sont agencées de manière à s'imbriquer autour de l'axe principal porteur de charge (A) ou s'étendent de façon imbriquée à partir d'un plan perpendiculaire à l'axe principal porteur de charge (A).

8. Dispositif selon l'une quelconque des revendications précédentes, dans lequel une compliance de la coque externe (4) est sensiblement différente, de préférence supérieure, à une compliance de l'élément interne (5), en particulier sous des charges vibratoires.

9. Dispositif selon l'une quelconque des revendications précédentes, dans lequel la coque externe (4) comprend une section plus déformable (4c) et une section moins déformable (4s), lesquelles sections sont adjacentes l'une par rapport à l'autre,
dans lequel de préférence la résistance de la section plus déformable (4c) est sensiblement égale ou supérieure à la résistance de la section moins déformable (4s),
dans lequel de préférence la section plus déformable (4c) comprend un élément de flexion (4f), par exemple un ensemble d'éléments de flexion (4f), des sections flexibles intégrées (104f ; 204f ; 304f, 304f', 304f").

10. Dispositif selon l'une quelconque des revendications précédentes, comprenant une couche de matériau d'amortissement (6),
dans lequel de préférence la couche présente :
- une épaisseur de couche (t) par rapport à une longueur axiale de la coque externe dans la plage de 0,1% à 10%, encore de préférence dans la plage de 0,5% à 5%, encore de préférence dans la plage de 1% à 3%, par exemple environ 2% ; et/ou
- une épaisseur de couche (t) inférieure à 5 mm, par exemple une épaisseur dans la plage de 0,1 à 2 mm ; et/ou
- mesurée dans un plan transversal à l'axe principal porteur de charge (A), une surface de section transversale de couche (SL) par rapport à une surface de section transversale totale du dispositif (SD) dans la plage de 10% à 50%, de préférence dans la plage de 25% à 35%, par exemple environ 30%.

11. Dispositif selon l'une quelconque des revendications précédentes, configuré pour fournir au moins un axe principal de charge (A1) et au moins un deuxième axe de charge supplémentaire (A2) qui est orthogonal par rapport à l'axe principal de charge (A1), dans lequel une surface interne de la coque externe (204 ; 304) et une surface externe opposée de l'élément interne (205 ; 305) s'étendent de préférence le long d'un plan qui est parallèle à un plan défini par l'axe principal de charge et le deuxième axe de charge supplémentaire (A2), dans lequel de préférence, la coque externe (204 ; 304) comprend au moins une paroi de coque ayant une ou plusieurs ouvertures (240 ; 340) pour définir un certain nombre d'éléments flexibles intégrés ou de sections flexibles sur la paroi, par exemple dans des structures en forme de poutre (204f ; 304f, 304f', 304f').

12. Ensemble (8) comprenant un ou plusieurs dispositifs (1) selon l'une quelconque des revendications précédentes et un support porteur (C) et/ou une charge (L), dans lequel le premier et/ou le deuxième support (2 et/ou 3) respectif du ou de chaque dispositif (1) est fixé au support porteur (C) et/ou à la charge (L),
dans lequel de préférence l'ensemble (8) est configuré pour former une structure sensiblement statiquement déterminée, dans lequel en particulier la charge (L) est montée de manière statiquement déterminée sur le support porteur (C),
dans lequel par exemple la charge (L) comprend un instrument optomécanique,
dans lequel par exemple le support porteur (C) comprend ou est fixé à un véhicule (9), par exemple un engin spatial, ou un wafer stepper (appareil de photolithographie pour tranches de semi-conducteur).

13. Véhicule (9), en particulier un engin spatial, comprenant un ensemble (8) selon la revendication 12,
dans lequel le support porteur (C) est fixé au véhicule (9) ou en fait partie, dans lequel de préférence le véhicule (9) est configuré pour coopérer avec un lanceur (10).

14. Procédé permettant de monter une charge (L) sur un support porteur (C), comprenant les faits de :
- prévoir un dispositif (1) selon l'une quelconque des revendications 1 à 11 ;
- fixer la charge (L) et l'un parmi le premier support (2) et le deuxième support (3) du dispositif (1) l'un à l'autre ; et
- fixer le support porteur (C) et l'autre parmi le premier support (2) et le deuxième support (3) du dispositif (1) l'un à l'autre.

15. Procédé de fabrication d'un dispositif (1) selon l'une quelconque des revendications 1 à 11, comprenant les faits de :
- prévoir un moule (11) configuré pour constituer au moins une partie de la coque externe (4) ;
- prévoir au moins une partie de l'élément interne (5) dans le moule (11) ;
- alimenter un matériau d'amortissement (6) sensiblement liquide dans le moule (11) ; et
- solidifier au moins partiellement, de préférence sensiblement, le matériau d'amortissement (6) alimenté dans le moule (11), liant ainsi de préférence le matériau d'amortissement (6) à l'élément interne (5) et au moule (11).
